## Europäisches Patentamt
## European Patent Office
## Office européen des brevets

(11) Numéro de publication: **0 088 857**
**B1**

(12) **FASCICULE DE BREVET EUROPEEN**

(45) Date de publication du fascicule du brevet:
27.08.86

(21) Numéro de dépôt: **82830057.4**

(22) Date de dépôt: **16.03.82**

(60) Numéro de publication de la demande initiale en
application de l'article 76 CBE: **0088857**

(51) Int. Cl.⁴: **B 60 T 8/32**

(54) Circuit hydraulique de freinage de véhicule automobile.

(43) Date de publication de la demande:
**21.09.83 Bulletin 83/38**

(45) Mention de la délivrance du brevet:
**27.08.86 Bulletin 86/35**

(84) Etats contractants désignés:
**DE FR GB IT SE**

(56) Documents cités:
**DE - A - 2 821 779**
**DE - A - 2 910 960**
**GB - A - 936 491**
**GB - A - 2 041 473**
**GB - A - 2 077 871**

(73) Titulaire: **BENDIX ITALIA S.p.A., Via Cavalli 53 A,
I-26013 Crema (IT)**

(72) Inventeur: **Cadeddu, Leonardo, Via Piacenza 29,
I-26013 Crema (IT)**

(74) Mandataire: **Poidatz, Emmanuel et al, Service Brevets
Bendix 44 rue François 1er, F-75008 Paris (FR)**

ACTORUM AG

## Description

L'invention concerne un circuit hydraulique de freinage de véhicule automobile dans lequel la pression de freinage est contrôlée par les conditions d'adhérence entre le pneu d'une roue freinée et le sol sur lequel le véhicule se déplace. On a déjà proposé dans le document DE-A-2 910 060, pour un véhicule où la suspension comporte un amortisseur téléscopique, un dispositif de butée et une commande mécanique pour un circuit hydraulique de freinage et qui est disposée sur le châssis du véhicule à l'extrémité suspendue de l'amortisseur téléscopique.

Le document GB-A-936 491 décrit un circuit hydraulique de freinage comportant une source de pression de freinage, un jeu de moteurs de frein associé à une roue du véhicule, une valve régulatrice de pression montée sur le châssis du véhicule et disposée entre la source et lesdits moteurs, ladite valve régulatrice comportant un clapet dont la fermeture est commandée par un piston soumis à la pression régnant dans lesdits moteurs de frein pour agir à l'encontre d'une force de réaction transmise par une commande mécanique, ladite commande mécanique étant associée à la suspension de ladite roue sur le châssis du véhicule.

Dans un tel circuit la force de réaction transmise par la suspension lors du freinage du véhicule est rendue variable avec les variations d'adhérence entre le pneu de la roue freinée et le sol sur lequel le véhicule se déplace. En particulier si la roue a tendance à se bloquer la force de réaction générée au niveau du contact pneu-sol va diminuer et par là permettre au piston de la valve régulatrice de se déplacer dans une direction entraînant la diminution de la pression de freinage dans les moteurs de frein évitant ainsi un blocage de la roue freinée.

L'invention a pour but d'améliorer le dispositif connu en ne transmettant au piston de la valve régulatrice qu'une force de réaction qui soit quasiment proportionnelle à la force d'adhérence longitudinale qui est créée par le contact pneu-sol. Ceci permet d'éviter des interférences nuisibles qui proviennent des variations de charges dynamiques du véhicule lors du freinage ou des vibrations de la suspension et de pouvoir ainsi surveiller de façon très précise les conditions d'adhérence entre la roue freinée et le sol et d'éviter son patinage.

L'invention propose un circuit hydraulique de freinage de véhicule automobile comportant une source de pression de freinage, un jeu de moteurs de frein associé à une roue du véhicule, une valve régulatrice de pression montée sur le châssis du véhicule et disposée entre la source et les moteurs, la valve régulatrice comportant un clapet dont la fermeture est commandée par un piston soumis à la pression régnant dans les moteurs de frein pour agir à l'encontre d'une force de réaction transmise par une commande mécanique, la commande mécanique étant associée à la suspension de la roue sur le châssis du véhicule par un dispositif de butée étant disposé sur le châssis à l'extrémité suspendue de l'amortisseur téléscopique, caractérisé en ce que l'extrémité suspendue est fixée à un plateau monté coulissant sur deux glissières solidaires du châssis du véhicule, la direction de coulissement étant parallèle à l'axe longitudinal de ce dernier.

L'invention est maintenant décrite en se référant aux dessins dans lesquels:

La Figure 1 présente une vue en coupe partielle du dispositif de butée incorporé dans le circuit hydraulique de freinage selon l'invention;

La Figure 2 présente une vue en coupe partielle selon la ligne A–A de la Figure 1;

La Figure 3 est une vue en coupe agrandie de la valve régulatrice de freinage représentée Figure 1;

La Figure 4 représente un graphe illustrant la variation du coefficient d'adhérence longitudinal CA en fonction du glissement G d'une roue freinée sur un sol d'adhérence limite constante; et

La Figure 5 est une vue schématique d'un système de suspension d'un véhicule, auquel peut être incorporé le dispositif suivant l'invention.

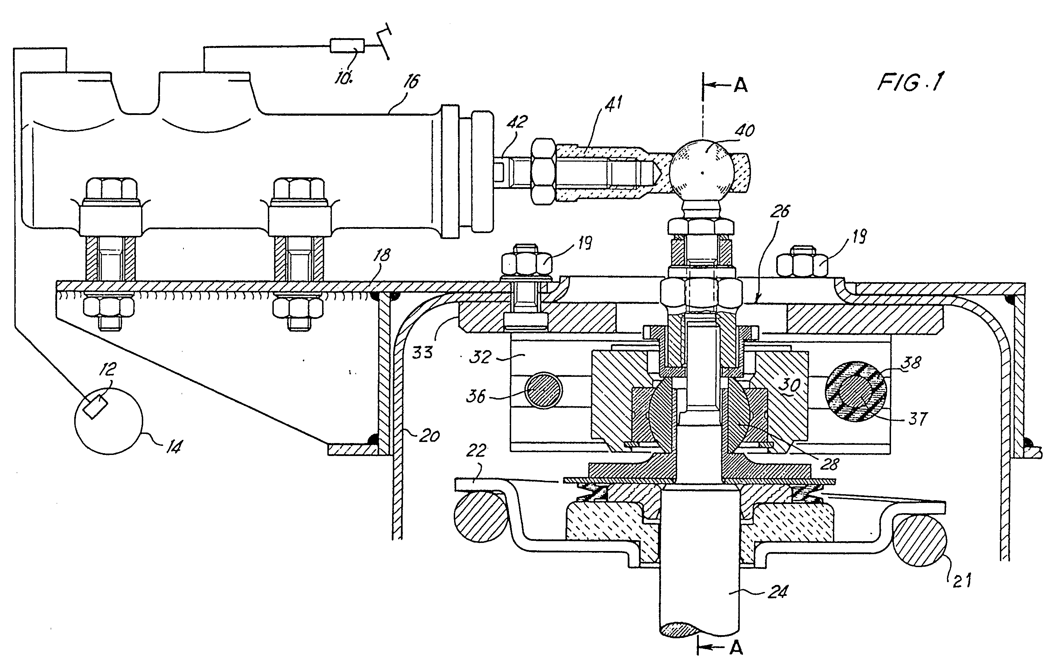

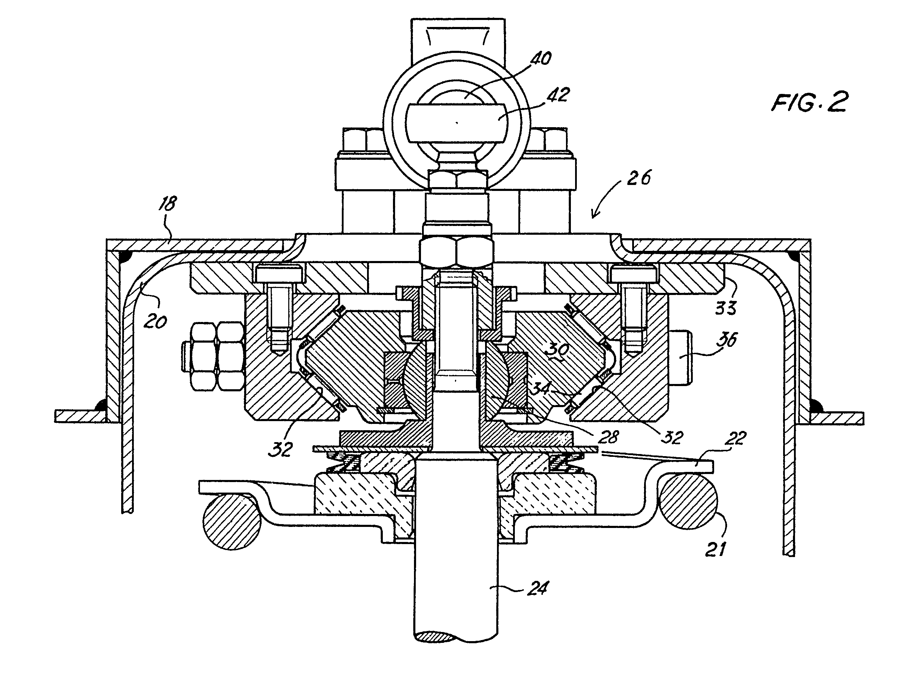

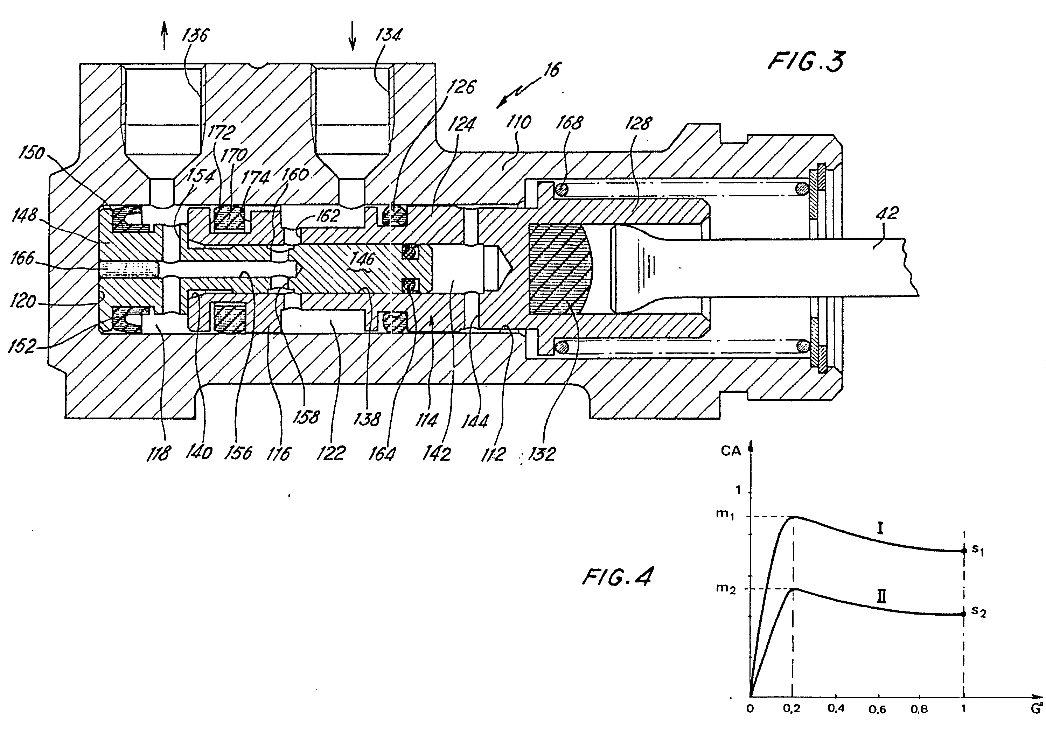

Si l'on considère la Figure 1 on a représenté schématiquement le circuit hydraulique de freinage avec un maître-cylindre 10, qui peut avantageusement être remplacé par tout autre source de pression hydraulique de freinage, un jeu de moteurs de frein 12 associé à une roue 14 du véhicule, et une valve régulatrice de freinage 16 disposée entre le maître-cylindre et le jeu de moteurs de freins et qui est représentée en coupe dans la Figure 3. La valve 16 est montée sur un bâti 18 lui-même fixé par des boulons 19 sur un dôme en tôle 20, solidaire du châssis du véhicule. La roue 14 est associée au châssis du véhicule par un dispositif classique de suspension comportant des moyens élastiques en particulier un ressort hélicoïdal 21 dont une extrémité (représentée partiellement) vient en appui sur une coupelle 22 et un amortisseur téléscopique dont seule l'extrémité suspendue 24 adjacente au châssis est visible. L'extrémité 24 est associée au châssis du véhicule par l'intermédiaire d'un dispositif de butée 26 représenté en coupe sur la figure et qui va être décrit plus en détail maintenant en se référant également à la Figure 2. L'extrémité 24 est montée par l'intermédiaire d'une rotule 28 sur un plateau 30 lui-même monté coulissant entre deux glissières en V 32 montées en vis-à-vis sur un disque support 33 lui-même fixé par des boulons 19 au dôme 20. Les deux glissières 32 s'étendent de façon parallèle à l'axe longitudinal du véhicule de telle sorte que le déplacement du plateau 30 ne peut se produire que dans cette direction. Pour améliorer le coulissement il est prévu deux jeux de rouleaux 34 disposés sur chacune des branches du V des glissières 32. L'assemblage est complété par deux goujons 36, 37 reliant rigidement les deux glissières, le goujon 37 adjacent à la partie avant du véhicule étant partiellement recouvert d'un amortisseur caoutchouté 38 servant de butée avant du plateau 30. L'extrémité 24 suspendue de l'amortisseur se termine par une rotule 40 solidaire d'une tige de poussée 42 par une liaison de longueur réglable 41. La tige de poussée 42 est destinée à contrôler le fonctionnement de la valve régulatrice de freinage qui va être décrit maintenant en se référant à la Figure 3.

La valve régulatrice de freinage représentée sur la Figure 3 comporte un boîtier 110 dans lequel est réalisé un alésage 112 dans lequel coulisse un piston 114. Le piston 114 a une première extrémité 116 coulissant dans l'alésage 112 pour séparer une chambre de sortie 118 adjacent au fond 120 du boîtier d'une chambre d'entrée 122. Le piston 14 comporte une autre extrémité 124 se projetant vers l'extérieur du boîtier et qui comporte d'une part un joint d'étanchéité 126 disposé entre la chambre d'entrée 122 et l'atmosphère et d'autre part une projection cylindrique 128 disposée à l'extérieur de l'alésage et dans laquelle est susceptible de coulisser la tige 142. Une butée de caoutchouc 132 disposée entre le piston 114 et la tête de la tige 142 fait office d'amortisseur. La chambre 122 est reliée par l'intermédiaire de l'orifice d'entrée 134 au maître-cylindre 110 tandis que la chambre de sortie 118 est reliée par l'orifice de sortie 136 au jeu de moteurs de frein 112. Le piston 114 comporte de plus un alésage interne 138 dont une extrémité 140 débouche dans la chambre de sortie 118 et dont l'autre extrémité 142 communique par des passages 144 avec l'extérieur de l'alésage 112. L'alésage 138 est monté coulissant sur l'extrémité libre d'une projection 146 maintenue fixe par rapport au boîtier. Dans le mode de réalisation ici décrit, la projection 146 est solidaire d'une pièce rapportée au boîtier présentant une tête épanouie 148 maintenue en appui sur le fond de l'alésage 120 et qui présente à sa partie périphérique une gorge 150 dans laquelle est montée une coupelle à lèvres 152 dont la lèvre se projette vers l'intérieur de la chambre de sortie. Cette coupelle à lèvres 152 a pour but de maintenir la tête 148 plaquée contre le fond de l'alésage 120 lors des opérations de freinage par action de la pression régnant dans la chambre 118. La projection 146 comporte un certain nombre de passages 154, 156 et 158 reliant la chambre de sortie 118 à une gorge 160 prévue sur la périphérie de la projection 146 et susceptible de chevaucher lorsque le piston occupe sa position de repos telle que représentée sur la Figure 3, avec des passages radiaux 162 réalisés dans le piston 114 entre la chambre d'entrée 122 et l'alésage interne 138. L'extrémité libre de la projection 146 comporte un joint d'étanchéité 164 pour isoler la gorge 160 de l'extérieur de l'alésage 112 et l'extrémité libre du passage 158 est bouchée par un bouchon 166. Un ressort de rappel 168 disposé entre le piston 114 et une butée fixe par rapport au boîtier sollicite le piston 114 en butée contre le boîtier plus exactement contre la projection 146 dans sa position de repos telle que représentée sur la Figure 3. Entre les deux chambres 118 et 122 est disposé un joint annulaire d'étanchéité 170 coulissant sur l'alésage 112 et faisant office de clapet anti-retour permettant le passage de fluide de la chambre de sortie 118 vers la chambre d'entrée 122 lors du relâchement de la pression de freinage. A cet effet, le joint 170 de section sensiblement rectangulaire est montée dans une gorge 172 prévue sur la partie périphérique de l'extrémité 116 du piston 114, la gorge 172 présentant une largeur axiale légèrement supérieure à la largeur du joint 170 et un diamètre minimum du joint 170. Pour faciliter l'écoulement de fluide on a réalisé sur l'extrémité 116 plusieurs entailles 174. Selon une variante le joint rectangulaire 170 est remplacé par une coupelle à lèvre semblable à la coupelle 152 et dont la lèvre se projette vers la chambre d'entrée 122.

La valve régulatrice de freinage ici décrite est du type limiteur de pression pour lequel les sections efficaces des deux extrémités 116 et 124 du piston 114 sont égales. Par ailleurs, il est à noter que compte tenu du fait que la communication entre les deux chambres 118 et 112 est obtenue par coulissement du piston 114 sur la projection 145 jusqu'à obturation des passages 162, les moyens formant valve ainsi définis présentent une section efficace sensiblement nulle par rapport au piston 114.

Le circuit de freinage qui vient d'être décrit fonctionne de la façon suivante:

Le circuit de freinage étant au repos et le véhicule se déplaçant à vitesse constante sur un sol qui pour l'instant est supposé d'adhérence constante, la valve régulatrice est dans sa position de repos telle que représentée dans la Figure 3 où le passage de fluide entre les orifices 134 et 136 est ouvert. Par ailleurs, la tige 42 occupe une position d'équilibre intermédiaire entre deux positions extrêmes, l'une où la tête de la tige 42 vient en appui contre la butée caoutchoutée 132 et l'autre correspondant à l'appui du plateau 30 sur la butée caoutchoutée 38. Le fait de laisser un jeu entre la tige 42 et la butée 132 est important car il permet d'assurer l'ouverture de la valve régulatrice lors du début du frainage et de ne pas retarder alors la mise en œuvre des moteurs de frein 12. Lorsque le conducteur sollicite la pédale du maître-cylindre, la pression monte dans la chambre d'entrée 122 et le piston 114 est sollicité vers la droite de la Figure 3. Le ressort de rappel 168 est en général d'un tarage faible mais suffisant pour s'assurer que la fermeture de la valve ne puisse intervenir qu'après l'établissement d'une faible pression de freinage (2 à 3 kg/cm²) dans le moteur 12 suffisante pour rattraper les jeux de la mécanique du frein correspondant. Par son déplacement vers la gauche de la Figure 3, le piston 114 va être soumis à une force de réaction transmise par la tige 42 qui est sensiblement proportionnelle au couple d'adhérence de la roue 14. En effet dès l'établissement d'une faible pression de freinage, les conditions d'adhérence de la roue freinée du véhicule sur le sol vont se modifier de telle sorte qu'un léger glissement de la roue va apparaître et que la roue va être soumise à un couple de réaction dit couple d'adhérence qui à l'inertie près de la roue du véhicule est absorbé par le couple de freinage agissant sur cette même roue. Il en ré-

sulte l'apparition de force de réaction sur la suspension reliant la roue freinée au châssis du véhicule. Grâce au dispositif de butée à un seul degré de liberté 26 les composantes verticales et transversales de ces forces sont absorbées par le châssis du véhicule tandis qu'une force proportionnelle à la composante longitudinale de ces forces de réaction est transmise à la tige 42. Il en résulte que lors d'une décélération du véhicule la tige 42 est sollicitée vers la gauche de la Figure 3 et est susceptible de transmettre au piston 114 une force de réaction sensiblement proportionnelle à la force d'adhérence longitudinale agissant sur la roue freinée, la force d'adhérence qui est multipliée par le rayon de la roue freinée donne la valeur du couple d'adhérence. Pour une adhérence limite déterminée du sol le coefficient d'adhérence CA varie selon une loi bien connue des techniciens du freinage automobile en fonction du glissement G de la roue freinée (le glissement G est donné par le rapport de la différence entre la vitesse du véhicule moins la vitesse de la roue sur la vitesse du véhicule). Cette variation est illustrée sur la Figure 4 où l'on peut remarquer que le coefficient d'adhérence CA croît rapidement de la valeur zéro jusqu'à atteindre au maximum «M» pour un glissement d'environ 20% puis décroît jusqu'à atteindre une valeur limite «S» représentative de l'adhérence limite du sol lorsque le glissement G atteint la valeur unité c'est-à-dire lorsque la roue est complètement bloquée. Ainsi donc au début du freinage la caractéristique de la roue se trouve donc sur la partie montante de la courbe d'adhérence «I» et la force de réaction sur la tige 42 va croître et permettre la réouverture de la valve 16 et son maintien de façon à augmenter la pression de freinage dans les moteurs. Lorsque la roue freinée menace de bloquer le glissement G de celle-ci va devenir supérieur à la valeur critique pour laquelle le coefficient d'adhérence est maximum «M1». Dans ce cas la force de réaction à la tige 42 diminue et le piston 114 se déplace vers la droite de la Figure 3 pour d'une part couper la communication entre les orifices 134 et 136 et d'autre part réduire la pression dans la chambre de sortie 118 et dans les moteurs de frein 12. Cette diminution de la pression de freinage entraînera une diminution du glissement G de la roue et donc un retour du coefficient d'adhérence vers sa valeur maximale «M1» ce qui aura pour effet une nouvelle augmentation de la force de réaction entraînant un déplacement du piston 114 vers la gauche de la Figure 3. Il en résulte que pour une adhérence limite déterminée du sol «S1», le piston-valve va osciller autour d'une position d'équilibre qui détermine dans la chambre de sortie 118 une pression de freinage sensiblement constante. Il est important de remarquer que le circuit de freinage proposé permet d'une part d'éviter le blocage de la roue freinée et d'autre part permet d'obtenir un freinage avec le maximum d'efficacité en conservant à la roue freinée un léger glissement de l'ordre de 20% qui correspond à la valeur maximum du coefficient d'adhérence.

Si l'adhérence limite du sol «S» vient à changer brusquement, par exemple à diminuer, la force de réaction diminuera proportionnellement de telle sorte que le piston valve 114 sera sollicité dans une direction entraînant une réduction de la pression de freinage, et le pilotage du piston se fera d'une façon analogue à celle déjà décrite selon une autre courbe du coefficient d'adhérence correspondant à la nouvelle adhérence du sol (par exemple passage de la courbe «I», à la coubre «II» de la Figure 4). Bien sûr, le processus inverse se produit si l'adhérence du sol vient à augmenter.

L'invention n'est pas limitée au type de valve ici décrit ni à l'installation de la butée à un seul degré de liberté à l'extrémité de l'amortisseur télescopique de la roue freinée, mais s'étend à tout circuit de freinage où le piston-valve est commandé à partir de la suspension de la roue par l'intermédiaire d'une transmission comportant un dispositif de butée susceptible de ne lui transmettre qu'une force de réaction sensiblement proportionnelle à la composante longitudinale par rapport à l'axe du véhicule de la force d'adhérence entre la roue et le sol sur lequel se déplace le véhicule.

Pour terminer il faut signaler que le circuit de freinage complet d'un véhicule équipé selon la présente invention comporte au moins deux valves régulatrices de freinage associées indépendemment aux roues d'un même essieu afin d'éviter une instabilité lors du freinage. Cet essieu peut être indifféremment l'essieu avant ou l'essieu arrière du véhicule.

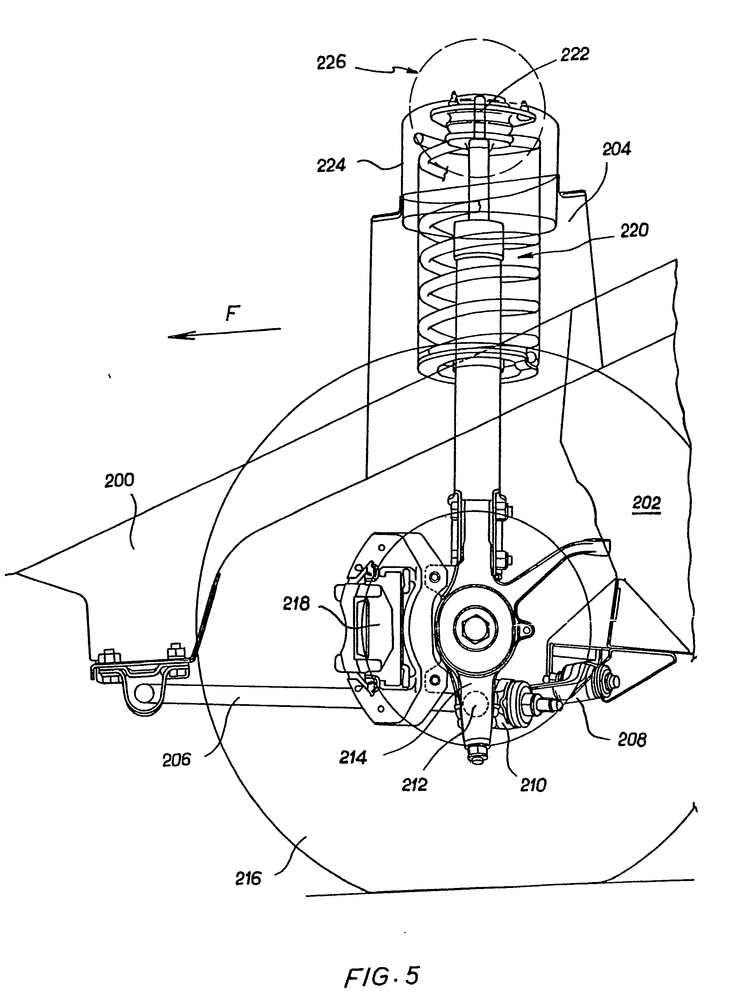

A titre d'exemple, la Figure 5 est une représentation schématique d'un système de suspension du type «McPherson» auquel peut être incorporé le dispositif suivant l'invention.

Le châssis du véhicule est constitué par divers composants 200, 202, 204, fixés rigidement entre eux.

Sur les composants 200 et 202 sont articulés deux bras oscillants 206 et 208 qui se rejoignent pour constituer un support 210 comportant un axe 212 sur lequel est reçu le porte fusée 214 qui supporte la roue 216 ainsi que son ensemble de frein 218. A son extrémité supérieure, le porte fusée est fixé rigidement à la partie inférieure d'un ensemble amortisseur-ressort 220, et la tête 222 de ce dernier est relié au châssis via un dôme 224. La flèche F indique la direction de déplacement du véhicule.

De manière avantageuse, on pourra associer le dispositif selon l'invention, tel que représenté à la Figure 1, à la tête 222 de l'ensemble amortisseur 220. A cet égard, la Figure 1 constituera une vue détaillée de la partie 226 de la Figure 5 entourée en pointillé.

## Revendications

1. Circuit hydraulique de freinage de véhicule automobile comportant une source de pression de freinage (10), un jeu de moteurs de frein (12) associé à une roue (14) du véhicule, une valve régulatrice (16) de pression montée sur le châssis du véhicule et disposée entre la source (10) et les moteurs (12), la valve régulatrice (16) comportant un clapet dont la fermeture est commandée par un piston (14) soumis à la pression régnant dans les moteurs de frein (12) pour agir à l'encontre d'une force de réaction transmise par une commande mécanique (42), la commande mécanique (42) étant associée à la suspension de la roue (14) sur le châssis du véhicule par un dispositif de butée présentant un seul degré de liberté et permettant un mouvement dont la direction est parallèle à l'axe longitudinal du véhicule, la suspension de ladite roue comportant un amortisseur télécsopique, le dispositif de butée étant disposé sur le châssis à l'extrémité suspendue de l'amortisseur téléscopique, caractérisé en ce que l'extrémité suspendue est fixée à un plateau (30) monté coulissant sur deux glissières (32) solidaires du châssis du véhicule, la direction de coulissement étant parallèle à l'axe longitudinal de ce dernier.

2. Circuit hydraulique de freinage selon la revendication 1, caractérisé en ce que les glissières (32) ont un profil en V.

3. Circuit hydraulique de freinage selon l'une des revendications 1 et 2, caractérisé en ce que le plateau (30) coopère avec les glissières par des rouleaux (34).

4. Circuit hydraulique de freinage selon l'une des revendications 1 à 3, caractérisé en ce que l'extrémité suspendue est fixée au plateau par l'intermédiaire d'une rotule (40).

### Claims

1. A hydraulic brake circuit for an automotive vehicle, comprising a brake pressure source (10), a plurality of brake motors (12) associated with a vehicle wheel (14), a pressure regulator valve (16) mounted on the vehicle frame and disposed between the source (10) and the motors (12), the regulator valve (16) comprising a valve member the closure of which is controlled by a piston (14) subjected to the pressure prevailing in the brake motors (12) for opposing a reaction force transmitted by a mechanical control (42), the mechanical control (42) being associated to the suspension of the wheel (14) on the vehicle frame by an abutment arrangement having a single degree of freedom and permitting a movement the direction of which is parallel to the longitudinal axis of the vehicle, the suspension of said wheel comprising a telescopic shock absorber, the abutment arrangement being disposed on the vehicle frame at the suspended extremity of the telescopic shock absorber, characterized in that the suspended extremity is fixed to a plate (30) slidingly mounted on a pair of slide rails (32) fixed to the vehicle frame, the sliding direction being parallel to the longitudinal axis of the latter.

2. The hydraulic brake circuit of claim 1, characterized in that the slide rails (32) have a V provile.

3. The hydraulic brake circuit of any of claims 1 and 2, characterized in that the plate (30) cooperates with the slide rails by rollers (34).

4. The hydraulic brake circuit of any of claims 1 to 3, characterized in that the suspended extremity is fixed to the plate via a universal joint (40).

### Patentansprüche

1. Hydraulischer Kraftfahrzeug-Bremskreis mit einer Bremsdruckquelle (10), einem Satz Bremsmotoren (12), der einem Fahrzeugrad (14) zugeordnet ist, einem Druckregelventil (16), das am Fahrzeugrahmen angebracht und zwischen der Druckquelle (10) und den Bremsmotoren (12) angebracht ist, wobei das Regelventil (10) einen Ventilkörper aufweist, dessen Schliessvorgang von einem Kolben (14) gesteuert wird, der dem in den Bremsmotoren (12) herrschenden Druck ausgesetzt ist, um einer von einer mechanischen Steuerung (42) übertragenen Reaktionskraft entgegenzuwirken, wobei die mechanische Steuerung (42) der Aufhängung des Rades (14) am Fahrzeugrahmen durch eine Anschlagvorrichtung zugeordnet ist, die einen einzigen Freiheitsgrad besitzt und eine Bewegung zulässt, deren Richtung parallel zur Längsachse des Fahrzeuges verläuft, wobei die Radaufhängung einen telskopierbaren Stossdämpfer aufweist, wobei die Anschlagvorrichtung am Fahrzeugrahmen am Aufhängungsende des teleskopierbaren Stossdämpfers angeordnet ist, dadurch gekennzeichnet, dass das Aufhängungsende an einer Platte (30) befestigt ist, die auf zwei mit dem Fahrzeugrahmen fest verbundenen Gleitführungen (32) gleitend gelagert ist, wobei die Gleitrichtung parallel zur Längsachse des letzteren verläuft.

2. Hydraulischer Bremskreis nach Anspruch 1, dadurch gekennzeichnet, dass die Gleitführungen (32) ein V-förmiges Profil haben.

3. Hydraulischer Bremskreis nach einem der Ansprüche 1 und 2, dadurch gekennzeichnet, dass die Platte (30) mit den Gleitführungen durch Rollen (34) zusammenwirkt.

4. Hydraulischer Bremskreis nach einem der Ansprüche 1–3, dadurch gekennzeichnet, dass das Aufhängungsende an der Platte über ein Kugelgelenk (40) befestigt ist.

FIG.1

FIG. 2

FIG.3

FIG.4

0 088 857

FIG. 5